# EUROPEAN PATENT APPLICATION

(11) **EP 4 344 032 A1**
(43) Date of publication of application: **27.03.2024**
(21) Application number: 23198520.1
(22) Date of filing: 20.09.2023
(51) Int. Cl.: H02K 11/042, H02K 19/38

(54) **LEAD WIRE BUSBAR**

(30) Priority: 22.09.2022 US 202217934329
(71) Applicant: Hamilton Sundstrand Corporation, Charlotte, NC 28217-4578 (US)
(72) Inventor: STROMBECK, Stephen, South Beloit, IL 61080 (US); APPELHANS, Trevor, Poplar Grove, IL 61065 (US); HOCHSTETLER, Derek R., Rockford, IL 61101 (US); PATEL, Dhaval S., Schaumburg, IL 60193 (US)
(74) Representative: Dehns

(57) **Abstract**

An assembly of a main stage (12) and exciter stage (14) of an electric machine includes a main stage including a main stage winding (20) with a main stage winding terminal (26), an exciter stage including an exciter winding (22) with an exciter stage winding terminal (28). A busbar assembly (24) connects electrically the main stage winding terminal to the exciter stage winding terminal. The busbar assembly includes a terminal post (30) being electrically connected and mechanically installed to the main stage winding terminal and extending at least partially through the exciter stage. The exciter winding terminal is electrically connected to a power band contact. The power band contact is installed over the terminal post and electrically connected to it.

## Description

### BACKGROUND

Exemplary embodiments pertain to the art of bus bar configurations, and in particular to those utilized in electric machines, such as generators.

Electric machines, for example, generators, often utilize a multi-stage construction that includes a main stage and an excited stage, with one or more bus bars utilized to electrically connect the windings of the two stages. The typical assembly of such a structure can be difficult and time-consuming and involving fishing of lead wires through components of the assembly, and also brazing of joints to make electrical connections. Such configurations are not only difficult to assemble, but difficult to repair should, for example, a crimp joint or other connection break.

### BRIEF DESCRIPTION

In one embodiment, an assembly of a main stage and exciter stage of an electric machine includes a main stage including a main stage winding, an exciter stage including an exciter winding, and a bus bar assembly to electrically connect the main stage winding to the exciter stage winding. The bus bar assembly includes a terminal post installed to the main stage and extending at least partially through the exciter stage. The main stage winding electrically is connected to the terminal post. A power band contact is installed to the terminal post and is electrically connected thereto. The exciter winding is electrically connected to the power band contact.

Additionally or alternatively, in this or other embodiments the terminal post is secured to the main stage via a bolted connection.

Additionally or alternatively, in this or other embodiments the terminal post is secured to the exciter stage via a bolted connection.

Additionally or alternatively, in this or other embodiments the power band contact includes a cylindrical portion and a shoulder extending radially outwardly from the cylindrical portion.

Additionally or alternatively, in this or other embodiments the power band contact is formed from spring copper.

Additionally or alternatively, in this or other embodiments the power band contact extends at least partially through the exciter stage.

Additionally or alternatively, in this or other embodiments the exciter winding extends from a resistor assembly of the exciter stage to the power band contact.

Additionally or alternatively, in this or other embodiments the exciter stage is formed as a module and installed to the terminal post.

Additionally or alternatively, in this or other embodiments the terminal post extends through a rotor opening in the exciter stage.

Additionally or alternatively, in this or other embodiments the terminal post is positioned in a post opening of the main stage.

In another embodiment, a method of assembling an exciter stage and a main stage of an electric machine includes installing a terminal post to the main stage, securing a field winding of the main stage to the terminal post, installing a power band contact to the exciter stage, installing the terminal post into the power band contact, and securing an exciter conductor to the power band contact.

Additionally or alternatively, in this or other embodiments the terminal post is secured to the main stage via a bolted connection.

Additionally or alternatively, in this or other embodiments the terminal post is secured to the exciter stage via a bolted connection.

Additionally or alternatively, in this or other embodiments the power band contact includes a cylindrical portion and a shoulder extending radially outwardly from the cylindrical portion.

Additionally or alternatively, in this or other embodiments the power band contact is formed from spring copper.

Additionally or alternatively, in this or other embodiments the power band contact is installed at least partially through the exciter stage.

Additionally or alternatively, in this or other embodiments the exciter winding extends from a resistor assembly of the exciter stage to the power band contact.

Additionally or alternatively, in this or other embodiments the exciter stage is formed as a module prior to installation to the terminal post.

Additionally or alternatively, in this or other embodiments the terminal post extends through a rotor opening in the exciter stage.

Additionally or alternatively, in this or other embodiments the terminal post is positioned in a post opening of the main stage.

### BRIEF DESCRIPTION OF THE DRAWINGS

The following descriptions should not be considered limiting in any way. With reference to the accompanying drawings, like elements are numbered alike:
FIG. 1 is a partial cross-sectional view of an embodiment of an electric machine and bus bar assembly;
FIG. 2 is a partial perspective view of an embodiment of an electric machine and bus bas assembly; and
FIG. 3 is a schematic illustration of assembly of an exciter stage to a main stage.

### DETAILED DESCRIPTION

A detailed description of one or more embodiments of the disclosed apparatus and method are presented herein by way of exemplification and not limitation with reference to the Figures.

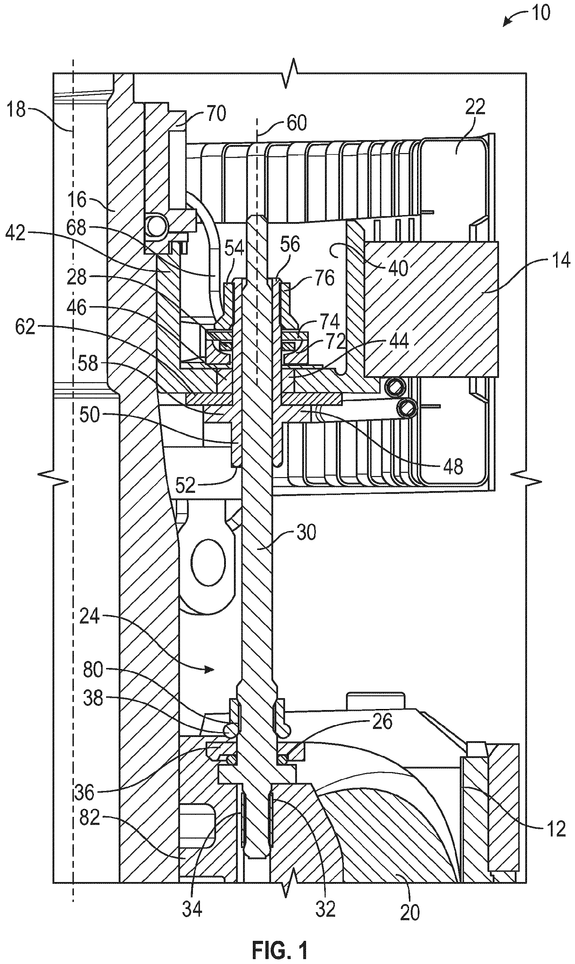

Referring to FIG. 1, illustrated is a partial cross-sectional view of an embodiment of an electric machine 10, for example, a generator. The electric machine 10 includes a main stage 12 and an exciter stage 14 arranged along a shaft 16 at a central axis 18. A field winding 20 of the main stage 12 is electrically connected to an exciter winding 22 of the exciter stage 14 via a bus bar assembly 24. The field winding 20 terminates at one or more terminals 26. Each of the terminals 26 is connected to an exciter terminal 28 of the exciter stage 14 via the bus bar assembly 24.

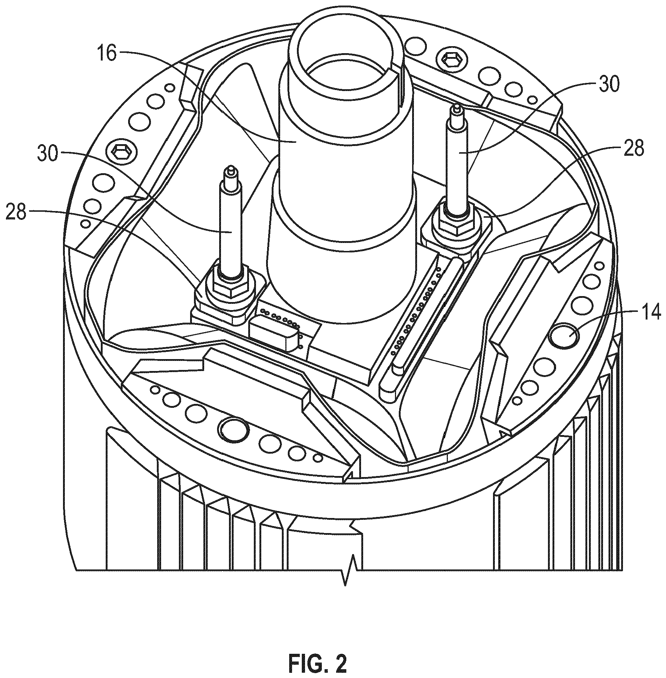

The bus bar assembly 24 includes a terminal post 30 that extends from the terminal 26 to the exciter terminal 28. In some embodiments, such as shown in FIG. 2, the assembly includes two terminal posts 30 to connect two terminals 26 to two exciter terminals 28. One skilled in the art, however, will readily appreciate that other quantities of terminal posts 30 may be utilized, depending on the winding configuration of the main stage 12 and the exciter stage 14. Referring again to FIG. 1, the terminal post 30 is secured to the main stage 12 at, for example, a terminal end 80 located around the shaft 16. The terminal end 82 includes a post opening 32, which has a threaded spacer 34 installed thereto. The terminal post is installed into the spacer 34 in the post opening 32. The terminal 26 is assembled to the terminal post 30, and a nut 80 is installed onto the terminal post 30 to secure the terminal post 30 in the post opening 32, and to also retain the terminal 26 at the terminal post 30. In some embodiments, one or more of a clamp washer 36 and a Belleville washer 38 are installed onto the terminal post 30 before the nut 80 is installed onto the terminal post 30.

The terminal post 30 extends from the main stage 12 toward the exciter stage 14 and is secured thereat. The exciter stage 14 includes an exciter rotor 40 having an exciter rotor hub 42. The exciter rotor 40 includes a rotor opening 44 through which the terminal post 30 extends. In some embodiments, an insulator bushing 46 is disposed in the rotor opening 44 between the exciter rotor 40 and the terminal post 30. In some embodiments, a power band contact 48 is disposed around the terminal post 30 and also extends through the rotor opening 44 between the insulator bushing 46 and the terminal post 30. The power band contact 48 is cylindrical in shape and includes a first portion 50 at a first end 52 of the power band contact 48 and a second portion 54 at a second end 56 of the power band contact 48, with a shoulder 58 between the first portion 50 and the second portion 54 extending radially outwardly relative to a power band contact axis 60. The power band contact 48, in some embodiments, is formed from spring copper such that when the terminal post 30 is installed through the power band contact 48, the power band contact 48 deforms and contacts the terminal post 30. In some embodiments, an interior of the power band contact 48 includes one or more contact features, such as serrated leaves, which contact the terminal post 30. A diode plate 62 is located on the terminal post 30 and is positioned between the shoulder 58 and the exciter rotor 40.

An exciter conductor 68 extends from a resistor assembly 70 at the shaft 16, toward the terminal post 30 and is installed over the power band contact 48 extending through the rotor opening 44 and is secured to the power band contact 48 via a nut 76. In some embodiments, one or more of a clamp washer 72 and a Belleville washer 74 are installed onto the power band contact 48before the nut 70 is installed onto the power band contact 48.

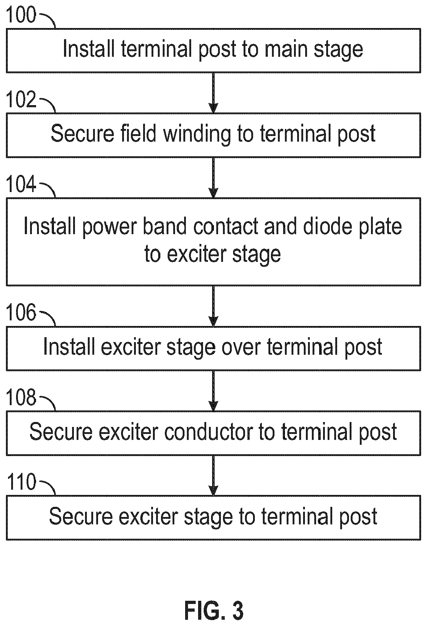

A method of assembly of the exciter stage 14 to the main stage 12 is illustrated in FIG. 3. In step 100, a terminal post 30 is installed to the main stage 12. At step 102, the terminal 26 of the field winding 20 is secured to the terminal post 30. At step 104, the power band contact 48 and the diode plate 60 are installed to the exciter stage 14. Next, at step 106, the exciter stage 14 is installed over the terminal post 30. At step 108, the exciter conductor 68 is secured to the power band contact 48 and at step 110 the nut 76 is installed to the power band contact 48 to secure the exciter stage 14 to the terminal post 30 and therefore to the main stage 12.

The terminal post 30 and bus bar assembly 24 as disclosed herein has numerous benefits including elimination of braze joints in the assembly via the utilization of bolted mechanical joints along the terminal post 30. Further, this configuration allows for the exciter stage 14 to be assembled as a module and them the completed exciter 14 is installed to the main stage 12 via the terminal post 30. Further, in this configuration, wires or leads no longer need to be fed through the exciter stage 14 from the main stage 12, and additionally the disclosed configuration is easier to disassemble and repair, requiring no unwinding of the field winding 20, instead the main stage 12 or excited stage 14, defined as modules, may merely be easily replaced.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An assembly of a main stage and exciter stage of an electric machine, comprising:
a main stage (12) including a main stage winding (20);
an exciter stage (14) including an exciter winding (22); and
a bus bar assembly (24) to electrically connect the main stage winding to the exciter stage winding, the bus bar assembly including:
a terminal post (30) installed to the main stage and extending at least partially through the exciter stage, the main stage winding electrically connected to the terminal post; and
a power band contact (48) installed to the terminal post and electrically connected thereto, the exciter winding electrically connected to the power band contact.

2. The assembly of claim 1, wherein the terminal post (30) is secured to the main stage (12) via a bolted connection; and/or wherein the terminal post (30) is secured to the exciter stage (14) via a bolted connection.

3. The assembly of claim 1 or 2, wherein the power band contact (48) includes a cylindrical portion and a shoulder (58) extending radially outwardly from the cylindrical portion; and/or wherein the power band contact (48) is formed from spring copper.

4. The assembly of claim 1, 2 or 3, wherein the power band contact (48) extends at least partially through the exciter stage (14).

5. The assembly of any preceding claim, wherein the exciter winding (22) extends from a resistor assembly (70) of the exciter stage (14) to the power band contact (48).

6. The assembly of any preceding claim, wherein the exciter stage (14) is formed as a module and installed to the terminal post (30).

7. The assembly of any preceding claim, wherein the terminal post (30) extends through a rotor opening (44) in the exciter stage; and/or wherein the terminal post is positioned in a post opening of the main stage (12).

8. A method of assembling an exciter stage and a main stage of an electric machine, comprising:
installing a terminal post to the main stage;
securing a field winding of the main stage to the terminal post;
installing a power band contact to the exciter stage;
installing the terminal post into the power band contact; and
securing an exciter conductor to the power band contact.

9. The method of claim 8, further comprising securing the terminal post to the main stage via a bolted connection; and/or further comprising securing the terminal post to the exciter stage via a bolted connection.

10. The method of claim 8 or 9, wherein the power band contact includes a cylindrical portion and a shoulder extending radially outwardly from the cylindrical portion; and/or wherein the power band contact is formed from spring copper.

11. The method of any of claims 8 to 10, further comprising installing the power band contact at least partially through the exciter stage.

12. The method of any of claims 8 to 11, wherein the exciter winding extends from a resistor assembly of the exciter stage to the power band contact.

13. The method of any of claims 8 to 12, further comprising forming the exciter stage as a module prior to installation to the terminal post.

14. The method of any of claims 8 to 13, further comprising extending the terminal post through a rotor opening in the exciter stage.

15. The method of any of claims 8 to 14, wherein the terminal post is positioned in a post opening of the main stage.
